# FASCICULE DE BREVET EUROPEEN

(11) **EP 2 976 279 B1**
(45) Date de publication et mention de la délivrance du brevet: **25.07.2018**
(21) Numéro de dépôt: 14710189.3
(22) Date de dépôt: 06.03.2014
(51) Int. Cl.: B65H 29/12, B65H 29/62, B65G 47/64, B65H 29/58

(54) **DISPOSITIF D'EJECTION D'UN OBJET PLAT EN COURS DE CONVOYAGE**
VORRICHTUNG ZUM AUSSTOSSEN EINES FLACHEN GEGENSTANDES WÄHREND DER FÖRDERUNG
DEVICE FOR EJECTING A FLAT OBJECT DURING CONVEYING

(30) Priorité: 18.03.2013 EP 13001359
(43) Date de publication de la demande: 27.01.2016
(73) Titulaire: BOBST MEX SA, 1031 Mex (CH)
(72) Inventeur: BRIZZI, Nicolas, CH-1920 Martigny (CH)
(74) Mandataire: Ehnle, Marcus
(86) Numéro de dépôt international: PCT/EP2014/000580
(87) Numéro de publication internationale: WO 2014/146757

(56) Documents cités:
- EP-A1- 0 884 262
- EP-A1- 2 554 278
- EP-A2- 2 316 766
- DE-B1- 2 857 565
- GB-A- 858 463
- JP-A- S5 688 065
- JP-U- S4 931 776
- JP-U- S5 799 860
- JP-U- S55 176 230
- US-A- 4 324 522

## Description

La présente invention concerne un dispositif permettant d'éjecter sélectivement des objets plats hors d'un chemin de transport le long duquel les objets plats sont convoyés. L'invention trouve une application particulièrement avantageuse, mais non exclusive, dans le domaine de la fabrication des boîtes d'emballage en carton ondulé.

Dans l'industrie de l'emballage, la fabrication de boîtes s'effectue traditionnellement en ligne, en pliant et en collant des découpes au moyen d'une machine communément appelée plieuse-colleuse. Une telle machine de traitement se présente habituellement sous la forme d'une succession de modules dans lesquelles sont répartis les multiples agencements fonctionnels chargés de réaliser les différentes opérations élémentaires nécessaires à la confection des boîtes. Chaque module dispose de son propre système de transport des découpes, mais l'ensemble est agencé de manière à ce qu'au final, le convoyage s'opère de façon continue sur toute la longueur de la plieuse-colleuse.

Il est par ailleurs connu de contrôler la qualité des découpes ou des boîtes au sein même d'une plieuse-colleuse, afin de détecter au plus tôt d'éventuels défauts tels que des anomalies d'impression, des erreurs de pliage ou un manque de colle par exemple. Un module spécifique est directement intégré dans la plieuse-colleuse, et qui est capable d'inspecter individuellement chaque découpe ou chaque boîte lorsque cette dernière le traverse. Une telle opération d'inspection peut s'effectuer à tout moment du processus de fabrication des boîtes, de sorte que le module de contrôle qualité peut en théorie être placé à tout endroit de la plieuse-colleuse.

Dans une plieuse-colleuse, un tel système de contrôle qualité est généralement combiné à un système d'éjection implanté plus en aval. Ce dernier est chargé d'extraire du flux continu de boîtes qui traverse la plieuse-colleuse, tout exemplaire qui a été préalablement identifié comme étant défectueux par le système de contrôle qualité.

### Etat de la technique

Parmi les dispositifs d'éjection connus de l'état de la technique, il existe ceux qui évacuent les boîtes défectueuses en les détournant de leur chemin de transport normal par l'intermédiaire d'un convoyeur orientable. Habituellement, il s'agit soit d'un convoyeur qui est doté d'une structure rigide montée intégralement mobile en déplacement, soit d'un convoyeur qui est pourvu d'une structure à géométrie variable à même d'être déformée localement. Ce convoyeur orientable est disposé le long du chemin de transport des boîtes, et il est monté orientable au niveau son extrémité aval tandis que son extrémité amont reste en permanence au niveau du chemin de transport ; Le déplacement de la partie mobile du convoyeur orientable s'apparentant dès lors à un pivotement angulaire.

Ce type de dispositif d'éjection présente toutefois l'inconvénient d'être particulièrement mal adapté aux objets plats de grandes dimensions et/ou de fortes épaisseurs et/ou peu flexibles, comme par exemple des plaques de carton ondulé.

En effet, lors de l'éjection d'un objet plat, la partie mobile du convoyeur orientable doit pivoter d'un angle important afin de pouvoir se dégager complètement de son environnement immédiat qui est essentiellement composé par le convoyeur aval directement adjacent. II en résulte qu'une fois orientée en position d'éjection, le convoyeur forme un angle prononcé par rapport au chemin de transport, angle qui a naturellement tendance à marquer tout objet plat qui passe à cet endroit précis.

Par ailleurs, le fait que le pivotement de la partie mobile du convoyeur orientable s'effectue sur une grande amplitude angulaire, signifie également qu'un temps relativement important est nécessaire pour passer de la position de convoyage à la position d'éjection et réciproquement. Or une telle contrainte va malheureusement avoir pour conséquence de pénaliser la cadence de fonctionnement de la machine dans laquelle le dispositif d'éjection est intégré.

Le document US 4324522 décrit une machine de manutention de feuille de métal, comprenant un convoyeur d'entrée muni d'une partie aval orientable, une structure de porte orientable, et un convoyeur de sortie restant à l'horizontal. Le premier convoyeur d'entrée et le convoyeur de sortie comprennent des courroies. La structure de porte orientable comprend un ensemble de barres porteuses de galets fous.

Le document JP S5688065 décrit un convoyeur à aiguillage pour distribuer et aiguiller un matériau en feuille. Le convoyeur comprend un premier transport amont restant horizontal, un deuxième transport d'aiguillage, un troisième transport se décalant, et un quatrième transport aval restant horizontal. L'extrémité aval du deuxième transport d'aiguillage descend en pivotant par rapport à sa poulie amont. L'extrémité amont du troisième transport se décalant monte en pivotant par rapport à sa poulie aval.

### Exposé de l'invention

Aussi, le problème technique à résoudre par l'objet de la présente invention, est de proposer un dispositif d'éjection d'un objet plat en cours de convoyage le long d'un chemin de transport, dispositif qui permet d'éviter les problèmes de l'état de la technique en offrant notamment une mise en oeuvre particulièrement rapide, tout en garantissant l'intégrité des objets plats.

La solution au problème technique posé consiste, selon la présente invention, en un dispositif d'éjection défini selon la revendication 1.

La notion d'objet plat s'étend à tout objet aplati et de faible épaisseur, indépendamment de son contour, de son format ou du matériau qui le compose, tel qu'une feuille entière, une feuille prédécoupée, un ensemble de poses ou découpes attachées ponctuellement les unes aux autres, une pose ou découpe individuelle, une boîte pliante, etc. Par ailleurs, un tel objet plat peut être réalisé dans un matériau quelconque, et notamment en papier, en carton compact, en carton ondulé, en matière plastique, etc.

II est également important de préciser que le fait qu'un convoyeur comporte au moins une partie orientable signifie qu'il s'agit d'un convoyeur pourvu d'une structure à géométrie variable à même d'être déformée localement afin qu'une partie seulement du convoyeur puisse être déplacée. Dans cette logique, chaque convoyeur orientable peut être de tout type connu. Il peut ainsi être constitué par un ou plusieurs transports inférieurs, par la combinaison d'un ou plusieurs transports supérieurs avec un système à même de plaquer les objets plats contre les transports supérieurs, par la superposition d'un ou plusieurs transports inférieurs avec un ou plusieurs transports supérieurs, etc. Dans le détail, chaque transport utilisé peut être de nature quelconque, comme par exemple un transporteur à bande, un transporteur à rouleaux ou un transporteur à galets.

Le principe de l'invention consiste à utiliser deux convoyeurs orientables successifs dont les extrémités mobiles respectives se font face. Le convoyeur d'entrée est chargé de dévier sélectivement le déplacement de certains objets plats afin de réaliser la fonction d'éjection à proprement parler, tandis que le convoyeur de sortie joue un rôle plus passif en ce sens où il ne fait que faciliter l'éjection. En fait, la mobilité de la partie orientable du convoyeur de sortie permet de libérer de l'espace au niveau de l'extrémité aval du convoyeur d'entrée, ce qui permet par conséquent de réduire l'amplitude du déplacement de la partie orientable du convoyeur d'entrée. Dans cette logique, il est bien évidemment essentiel que les déplacements des parties orientables respectives s'opèrent dans des zones opposées par rapport au chemin de transport.

L'invention telle qu'ainsi définie s'avère particulièrement bien adaptée aux objets plats de grandes dimensions et/ou de fortes épaisseurs et/ou peu flexibles. En effet, comme le déplacement de la partie orientable du convoyeur d'entrée s'opère sur une faible amplitude, il s'avère particulièrement rapide à réaliser ce qui permet de ne pas dégrader le rendement de la machine dans laquelle le dispositif d'éjection est intégré. Par ailleurs, l'angle formé entre la partie orientable du convoyeur d'entrée et le chemin de transport est tellement peu prononcé qu'il n'a absolument pas tendance à marquer les objets plats au moment où ils sont déviés. Ainsi donc, l'invention peut être employée aussi bien pour effectuer de l'éjection de gâche, c'est-à-dire pour évacuer des objets plats défectueux destinés à être éliminés, que pour faire de l'échantillonnage, c'est-à-dire pour prélever des objets plats sans les abimer afin de pouvoir éventuellement les réutiliser.

### Brève description des dessins

La présente invention concerne en outre les caractéristiques qui ressortiront de la description qui va suivre, et qui devront être considérées isolément ou selon toutes leurs combinaisons techniques possibles. Cette description, donnée à titre d'exemple non limitatif, est destinée à mieux faire comprendre l'invention et comment elle peut être réalisée. La description est par ailleurs donnée en référence aux dessins annexés dans lesquels:
- la Figure 1 illustre une plieuse-colleuse qui est équipée d'un système de contrôle qualité auquel est associé un dispositif d'éjection conforme à l'invention;
- la Figure 2 montre en détail l'intégration du dispositif d'éjection au sein de la plieuse-colleuse;
- la Figure 3 est une vue schématique du dispositif d'éjection en position de convoyage;
- la Figure 4 constitue une vue schématique du dispositif d'éjection en position d'éjection;
- la Figure 5 représente le dispositif d'éjection de la Figure 2 en position de convoyage; et
- la Figure 6 fait apparaître le dispositif d'éjection de la Figure 2 en position d'éjection.

### Exposé détaillé des formes de réalisation préférées

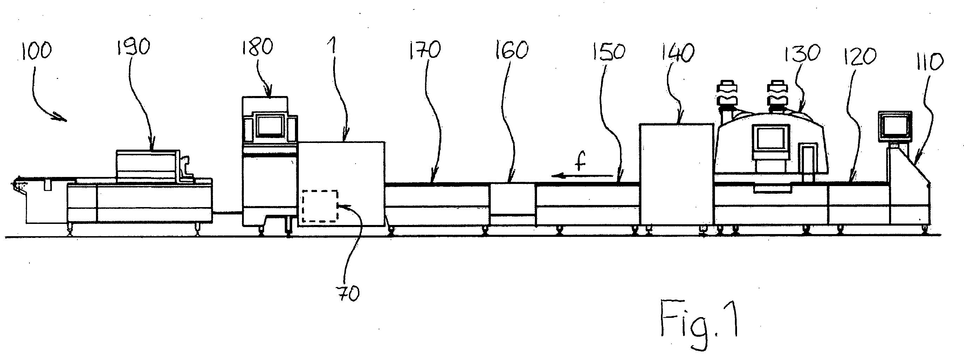

La Fig. 1 illustre une plieuse-colleuse 100 chargée de plier et de coller une succession d'éléments plats 101 en forme de découpes en vue de fabriquer des boîtes pliantes. Dotée d'une structure modulaire, cette plieuse-colleuse 100 est classiquement composée d'un margeur 110, d'un module d'alignement 120, d'un module de contrôle qualité 130, d'un module de gaufrage de caractères braille 140, d'un module de précassage 150, d'un module d'encollage 160, d'un module de pliage 170, d'un module de transfert 180 et d'un module de réception 190. Ces différents éléments étant parfaitement connus de l'état de la technique, ils ne sont pas décrits en détail ici, tant structurellement que fonctionnellement.

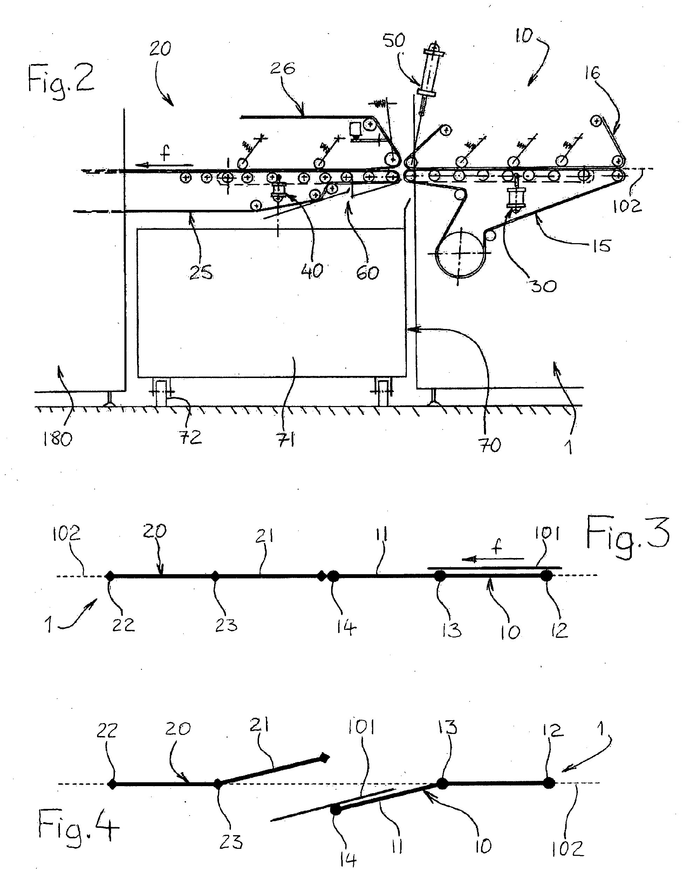

Les Figs. 1 et 2 montrent que la plieuse-colleuse 100 est en outre pourvue d'un dispositif d'éjection 1 qui est implanté directement entre le module de pliage 170 et le module de transfert 180. Ce dispositif 1 est chargé d'éjecter sélectivement certaines des boîtes 101 qui sont convoyées (flèche f) le long du chemin de transport 102 qui traverse toute la plieuse-colleuse 100. Dans le cas présent, il s'agit de boîtes 101 obtenues à partir de découpes qui ont été jugées défectueuses par le module de contrôle qualité 130 placé beaucoup plus en amont dans la plieuse-colleuse 100.

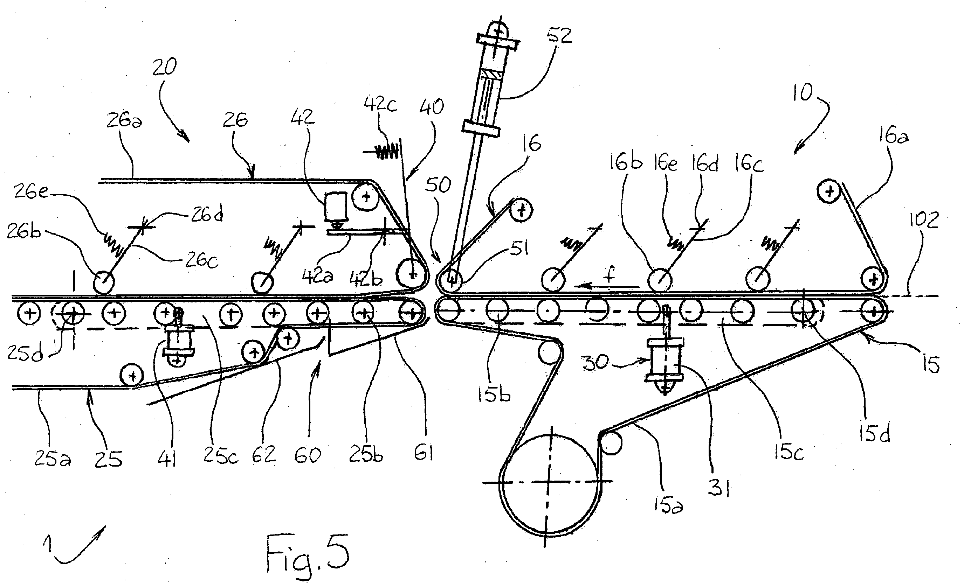

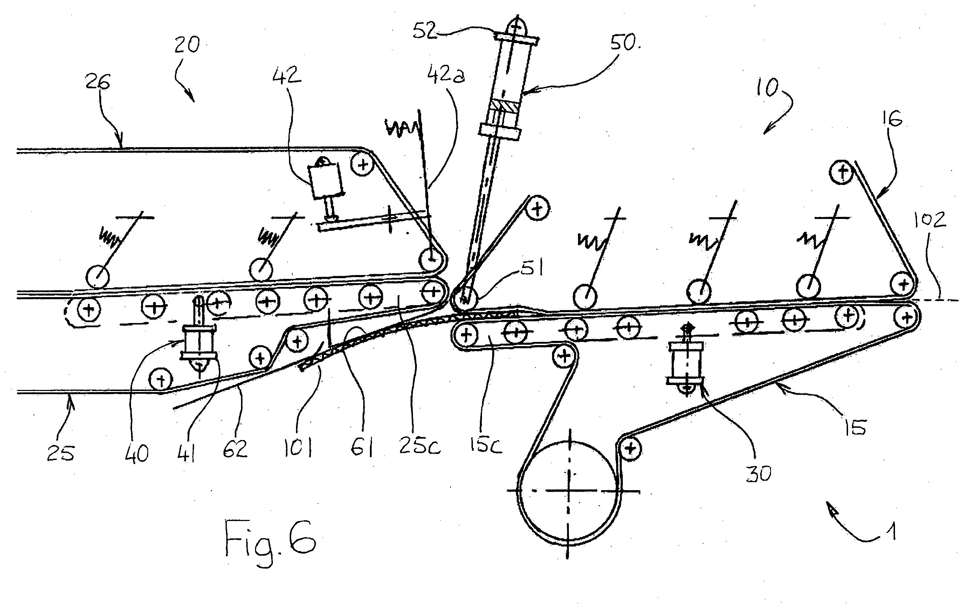

Les représentations schématiques des Figs. 3 et 4 facilite la compréhension des premières caractéristiques de l'invention, sachant que les caractéristiques en question sont bien évidemment intégralement reprises dans l'exemple de réalisation des Figs. 5 et 6.

Conformément à l'objet de la présente invention, le dispositif d'éjection 1 est composé de deux convoyeurs qui sont disposés successivement l'un à la suite de l'autre le long du chemin de transport 102, en l'occurrence un convoyeur d'entrée 10 et un convoyeur de sortie 20. La partie aval du convoyeur d'entrée 10, dite partie orientable 11, est montée mobile en déplacement. Cette mobilité s'exerce entre une position de convoyage dans laquelle le convoyeur d'entrée 10 est en mesure de transporter toute boîte 101 le long du chemin de transport 102 (Fig. 3), et une position d'éjection dans laquelle le convoyeur d'entrée 10 est à même de transporter toute boîte 101 dans une direction qui est distincte du chemin de transport 102 (Fig. 4). La partie amont du convoyeur de sortie 20, dite partie orientable 21, est elle aussi montée mobile en déplacement entre une position de convoyage et une position d'éjection. Mais l'ensemble est ici agencé de manière à ce qu'en position de convoyage, le convoyeur de sortie 20 soit en mesure de transporter toute boîte 101 le long du chemin de transport 102 (Fig. 3), et à ce qu'en position d'éjection, la partie orientable 21 du convoyeur de sortie 20 s'étende à la fois dans une direction qui est distincte du chemin de transport 102, et dans une zone de l'espace qui, par rapport au chemin de transport 102, est opposée à celle occupée par la partie orientable 11 du convoyeur d'entrée 10 lorsque cette dernière est elle aussi en position d'éjection (Fig. 4).

Selon une particularité de l'invention, l'extrémité amont 12 du convoyeur d'entrée 10 est positionnée en permanence au niveau du chemin de transport 102, que la partie orientable 11 soit en position de convoyage (Fig. 3), en position d'éjection (Fig. 4) ou en cours de déplacement. Cette caractéristique permet d'éjecter une boîte donnée, tout en prenant en charge le transport de la ou des boîtes suivantes au niveau du convoyeur d'entrée 10.

De manière sensiblement analogue, l'extrémité aval 22 du convoyeur de sortie 20 est positionnée en permanence au niveau du chemin de transport 102, que la partie orientable 21 soit en position de convoyage (Fig. 3), en position d'éjection (Fig. 4) ou en cours de déplacement. Un tel agencement permet pour sa part d'éjecter une boîte donnée, tout en évacuant la ou les boîtes précédentes dont le transport est déjà pris en charge par le convoyeur de sortie 20.

Selon une autre particularité de l'invention parfaitement visible sur la Fig. 4, en position de d'éjection, la partie orientable 11 du convoyeur d'entrée 10 et la partie orientable 21 du convoyeur de sortie 20 s'étendent dans des directions qui sont chacune obliques par rapport à chemin de transport (102), et qui présentent des inclinaisons respectives sensiblement identiques. Cette caractéristique permet de répartir égalitairement entre les deux convoyeurs 10, 20, la mobilité relative en écartement qui est nécessaire aux parties orientables correspondantes 11, 21 pour que l'éjection s'effectue dans de bonnes conditions. L'intérêt de cette configuration est d'uniformiser les déplacements respectifs des parties orientables 11, 21, afin de pouvoir disposer simplement de temps de déplacement semblables. L'objectif final est de faciliter la cinématique de fonctionnement du dispositif d'éjection 1 dans son ensemble.

De manière particulièrement avantageuse, le chemin de transport 102 s'étendant sensiblement à l'horizontal, le déplacement de la partie orientable 11 du convoyeur d'entrée 10 s'effectue vers le bas, tandis que le déplacement de la partie orientable 21 du convoyeur de sortie 20 s'opère vers le haut. Un tel agencement permet d'évacuer les boîtes 101 vers le bas, et donc d'utiliser la gravité pour entraîner leur déplacement au-delà du convoyeur d'entrée 10. Il est ainsi possible de se dispenser d'un convoyeur supplémentaire, ce qui représente un avantage en termes d'encombrement, de coût et de fiabilité pour l'ensemble du dispositif d'éjection 1.

Conformément à un mode de réalisation actuellement préféré de l'invention, la partie orientable 11 du convoyeur d'entrée 10 est montée mobile en pivotement par rapport à un axe transversal qui est situé au niveau du chemin de transport 102 et qui est positionné à l'extrémité amont 13 de la partie orientable 11. Pour sa part, la partie orientable 21 du convoyeur de sortie 20 est montée mobile en pivotement par rapport à un axe transversal qui est situé au niveau du chemin de transport 102 et qui est positionné à l'extrémité aval 23 de la partie orientable 21. L'ensemble est bien évidement agencé de façon à ce qu'entre la position de convoyage et la position d'éjection, la partie orientable 11 du convoyeur d'entrée 10 et la partie orientable 21 du convoyeur de sortie 20 pivotent dans des sens opposés ; les axes de pivotement correspondant étant ici parfaitement parallèles.

Sur les Figs. 5 et 6, dans ce mode particulier de réalisation choisi uniquement à titre d'exemple, chaque convoyeur 10 et 20 est constitué par la superposition de deux transporteurs à courroies, parmi lesquels un transporteur inférieur 15 et 25 et un transporteur supérieur 16 et 26. Chacun de ces transporteurs à courroies 15, 16, 25 et 26 est classiquement composé d'une courroie sans fin 15a, 16a, 25a et 26a qui est à même d'être entraînée en défilement par rapport à une pluralité de galets de guidage 15b, 16b, 25b et 26b servant de renvoi et/ou d'appui.

La partie orientable 11 du convoyeur d'entrée 10 concerne à la fois la partie aval du transporteur inférieur 15 et la partie aval du transporteur supérieur 16. Les galets de guidage 15b, qui supportent la courroie de transport 15a au niveau de la partie aval du transporteur inférieur 15, sont solidaires d'un support 15c qui est monté pivotant par rapport à un axe transversal 15d. Les galets de guidage 16b, qui maintiennent la courroie de transport 16a au niveau de la partie aval du transporteur supérieur 16, sont quant à eux montés individuellement mobiles en déplacement afin de pouvoir suivre au mieux le pivotement de la partie aval du transporteur inférieur 15. Concrètement, chaque galet de guidage 16b est fixé à l'extrémité d'une biellette 16c qui est montée pivotante par rapport à un axe transversal 16d, et qui est couplée à un ressort de compression 16e chargée de l'entraîner en pivotement de telle sorte que le galet de guidage 16b plaque en permanence la courroie de transport 16a contre le transporteur inférieur 15.

De manière analogue, la partie orientable 21 du convoyeur de sortie 20 concerne à la fois la partie amont du transporteur inférieur 25 et la partie amont du transporteur supérieur 26. Les galets de guidage 25b, qui supportent la courroie de transport 25a au niveau de la partie amont du transporteur inférieur 25, sont solidaires d'un support 25c qui est monté pivotant par rapport à un axe transversal 25d. Les galets de guidage 26b, qui maintiennent la courroie de transport 26a au niveau de la partie amont du transporteur supérieur 26, sont quant à eux montés individuellement mobiles en déplacement afin de pouvoir accompagner au mieux le pivotement de la partie amont du transporteur inférieur 25. Dans le détail, chaque galet de guidage 26b est fixé à l'extrémité d'une biellette 26c qui est montée pivotante par rapport à un axe transversal 26d, et qui est couplée à un ressort de compression 26e chargée de l'entraîner en pivotement de telle sorte que le galet de guidage 26b plaque en permanence la courroie de transport 26a contre le transporteur inférieur 25.

Selon une autre particularité de l'invention, le dispositif d'éjection 1 est doté de premiers moyens d'actionnement 30 qui sont en mesure d'entraîner le déplacement de la partie orientable 11 du convoyeur d'entrée 10 entre la position de convoyage et la position d'éjection.

Dans cet exemple de réalisation, les premiers moyens d'actionnement 30 sont constitués par un vérin 31 qui travaille sensiblement verticalement pour faire basculer le support pivotant 15c sur lequel sont montés les galets de guidage 15b qui supportent la courroie de transport 15a au niveau de la partie aval du transporteur inférieur 15.

De façon analogue, le dispositif d'éjection 1 est pourvu de seconds moyens d'actionnement 40 qui sont à même d'entraîner le déplacement de la partie orientable 21 du convoyeur de sortie 20 entre la position de convoyage et la position d'éjection.

Dans cet exemple de réalisation, les seconds moyens d'actionnement 40 comprennent tout d'abord un premier vérin 41 qui travaille sensiblement verticalement pour faire basculer le support pivotant 25c sur lequel sont montés les galets de guidage 25b qui supportent la courroie de transport 25a au niveau de la partie amont du transporteur inférieur 25. Mais les seconds moyens d'actionnement 40 comportent également un second vérin 42 qui travaille lui aussi verticalement pour faire basculer un support 42a qui est monté pivotant par rapport à un axe transversal 42b, et qui supporte à son extrémité le galet de guidage 26b matérialisant l'extrémité amont du transporteur supérieur 26. Un ressort de compression 42c est par ailleurs prévu pour faciliter le retour du support pivotant 42a dans sa position initiale qui correspond à la position de convoyage.

De manière particulièrement avantageuse, le dispositif d'éjection 1 comporte également des moyens d'expulsion 50 qui sont chargés d'expulser chaque boîte 101 à l'extrémité aval 14 du convoyeur d'entrée 10 lorsque la partie orientable 11 est en position d'éjection.

Dans cet exemple de réalisation, les moyens d'expulsion 50 sont constitués par un galet éjecteur 51 qui est placé à l'extrémité aval du transporteur supérieur 16 du convoyeur d'entrée 10, et qui est monté mobile en déplacement afin d'être en mesure de mettre en pression la courroie de transport 16a contre son homologue du transporteur inférieur 15. Pour cela, le galet éjecteur 51 est monté à l'extrémité d'un vérin 52 qui est à même de le déplacer sensiblement verticalement en fonction de la position de la partie aval du transporteur inférieur 15.

Conformément à une autre caractéristique avantageuse, le dispositif d'éjection 1 dispose en outre de moyens de guidage 60 qui sont capables de guider le déplacement de chaque boîte 101 à la sortie du convoyeur d'entrée 10 lorsque la partie orientable 11 est en position d'éjection.

Dans cet exemple de réalisation, les moyens de guidage 60 comprennent un déflecteur statique 62 qui est fixe, ainsi qu'un déflecteur mobile 61 qui est solidaire de la partie orientable 21 du convoyeur de sortie 20. L'ensemble est par ailleurs agencé de telle sorte que lorsque le convoyeur de sortie 20 est en position d'éjection, le déflecteur mobile 61 s'étende de manière sensiblement coplanaire par rapport au déflecteur statique 62 (Fig. 6).

Selon une autre particularité de l'invention visible sur les Figs. 1 et 2, le dispositif d'éjection 1 est par ailleurs doté de moyens de récupération 70 qui sont en mesure de recevoir chaque boîte 101 qui est évacué à la sortie du convoyeur d'entrée 10. Il est entendu ici que ces moyens de récupération 70 peuvent être de tout type connu, comme un chariot mobile monté extractible, un tapis d'évacuation ou une fosse de récupération par exemple.

Dans cet exemple de réalisation, les moyens de récupération 70 sont constitués par un chariot mobile 71 qui prend place sous l'extrémité aval 14 du convoyeur d'entrée 10, et qui est monté extractible vers l'extérieur du dispositif d'éjection 1 par l'intermédiaire d'un série de roulettes 72.

Bien entendu, l'invention concerne également tout module de machine de pliage et de collage 100, qui comporte au moins un dispositif d'éjection 1 tel que précédemment décrit. Dans cette logique, il est important de préciser ici qu'un dispositif d'éjection conforme à l'invention peut être intégré indifféremment dans un module spécifique c'est-à-dire spécialement dédié à l'éjection, dans un module disposant déjà d'une fonctionnalité principale, ou simultanément dans deux modules directement adjacents.

Mais plus généralement encore, l'invention est aussi relative à toute machine de pliage et de collage 100 équipée d'au moins un dispositif d'éjection 1 tel que précédemment décrit.

## Revendications

1. Dispositif d'éjection (1) d'un objet plat (101) en cours de convoyage le long d'un chemin de transport (102), comportant un convoyeur d'entrée (10) et un convoyeur de sortie (20) qui sont disposés successivement l'un à la suite de l'autre le long du chemin de transport (102),
au moins la partie aval du convoyeur d'entrée (10), dite partie orientable (11), est montée mobile entre une position de convoyage dans laquelle le convoyeur d'entrée (10) est apte à transporter l'objet plat (101) le long du chemin de transport (102), et une position d'éjection dans laquelle le convoyeur d'entrée (10) est apte à transporter l'objet plat (101) dans une direction distincte du chemin de transport (102), et
au moins la partie amont du convoyeur de sortie (20), dite partie orientable (21), est montée mobile entre une position de convoyage dans laquelle le convoyeur de sortie (20) est apte à transporter l'objet plat (101) le long du chemin de transport (102), et la position d'éjection dans laquelle la partie orientable (21) du convoyeur de sortie (20) s'étend dans une direction qui est distincte du chemin de transport (102), et dans une zone de l'espace qui, par rapport au chemin de transport (102), est opposée à celle occupée par la partie orientable (11) du convoyeur d'entrée (10) lorsque cette dernière est elle aussi en position d'éjection,
**caractérisé**
**en ce que** chaque convoyeur (10, 20) est pourvu d'une structure à géométrie variable à même d'être déformée localement afin qu'une partie seulement (11, 21) du convoyeur (10, 20) peut être déplacée, et
**en ce que** chaque convoyeur (10, 20) est constitué par la superposition de deux transporteurs, un transporteur inférieur (15, 25) et un transporteur supérieur (16, 26), la partie orientable (11) du convoyeur d'entrée (10) concerne à la fois la partie aval du transporteur inférieur (15) et la partie aval du transporteur supérieur (16), la partie orientable (21) du convoyeur de sortie (20) concerne à la fois la partie amont du transporteur inférieur (25) et la partie amont du transporteur supérieur (26).

2. Dispositif selon la revendication 1, **caractérisé en ce que** l'extrémité amont (12) du convoyeur d'entrée (10) est positionnée en permanence au niveau du chemin de transport (102).

3. Dispositif selon la revendication 1 ou 2, **caractérisé en ce que** l'extrémité aval (22) du convoyeur de sortie (20) est positionnée en permanence au niveau du chemin de transport (102).

4. Dispositif selon l'une des revendications précédentes, **caractérisé en ce qu'**en position de d'éjection, la partie orientable (11) du convoyeur d'entrée (10) et la partie orientable (21) du convoyeur de sortie (20) s'étendent par rapport à chemin de transport (102) dans des directions obliques dont les inclinaisons respectives sont sensiblement identiques.

5. Dispositif selon l'une des revendications précédentes, **caractérisé en ce que** le chemin de transport (102) s'étendant sensiblement à l'horizontal, le déplacement de la partie orientable (11) du convoyeur d'entrée (10) s'effectue vers le bas, tandis que le déplacement de la partie orientable (21) du convoyeur de sortie (20) s'opère vers le haut.

6. Dispositif selon l'une des revendications précédentes, **caractérisé en ce qu'**en ce que la partie orientable (11) du convoyeur d'entrée (10) est montée mobile en pivotement par rapport à un axe transversal qui est situé au niveau du chemin de transport (102) et qui est positionné à l'extrémité amont (13) de la partie orientable (11), et **en ce que** la partie orientable (21) du convoyeur de sortie (20) est montée mobile en pivotement par rapport à un axe transversal qui est situé au niveau du chemin de transport (102) et qui est positionné à l'extrémité aval (23) de la partie orientable (21).

7. Dispositif selon l'une des revendications précédentes, **caractérisé en ce qu'**il comporte des premiers moyens d'actionnement (30) aptes à entraîner le déplacement de la partie orientable (11) du convoyeur d'entrée (10) entre la position de convoyage et la position d'éjection.

8. Dispositif selon l'une des revendications précédentes, **caractérisé en ce qu'**il comporte des seconds moyens d'actionnement (40) aptes à entraîner le déplacement de la partie orientable (21) du convoyeur de sortie (20) entre la position de convoyage et la position d'éjection.

9. Dispositif selon l'une des revendications précédentes, **caractérisé en ce qu'**il comporte des moyens d'expulsion (50) aptes à expulser chaque objet plat (101) à l'extrémité aval (14) du convoyeur d'entrée (10) lorsque la partie orientable (11) est en position d'éjection.

10. Dispositif selon l'une des revendications précédentes, **caractérisé en ce qu'**il comporte des moyens de guidage (60) aptes à guider le déplacement de chaque objet plat (101) à la sortie du convoyeur d'entrée (10) lorsque la partie orientable (11) est en position d'éjection.

11. Dispositif selon la revendication 10, **caractérisé en ce que** les moyens de guidage (60) comportent un déflecteur statique (62) qui est fixe, ainsi qu'un déflecteur mobile (61) qui est solidaire de la partie orientable (21) du convoyeur de sortie (20), et **en ce que** lorsque le convoyeur de sortie (20) est en position d'éjection, le déflecteur mobile (61) s'étend de manière sensiblement coplanaire par rapport au déflecteur statique (62).

12. Dispositif selon l'une des revendications précédentes, **caractérisé en ce qu'**il comporte des moyens de récupération (70) aptes à recevoir chaque objet plat (101) qui est évacué à la sortie du convoyeur d'entrée (10).

13. Module de machine de pliage et de collage (100), **caractérisé en ce qu'**il comporte au moins un dispositif d'éjection (1) selon l'une des revendications précédentes.

14. Machine de pliage et de collage (100), **caractérisée en ce qu'**elle comporte au moins un dispositif d'éjection (1) selon l'une des revendications 1 à 12.

## Patentansprüche

1. Auswurfvorrichtung (1) für ein flaches Objekt (101), das entlang einer Transportstrecke (102) befördert wird, die ein Einlaufförderband (10) und ein Auslaufförderband (20) umfasst, die entlang der Transportstrecke (102) nacheinander angeordnet sind,
wobei zumindest der hintere Abschnitt des Einlaufförderbandes (10), schwenkbarer Abschnitt (11) genannt, beweglich zwischen einer Förderposition, in der das Einlaufförderband (10) in der Lage ist, das flache Objekt (101) entlang der Förderstrecke (102) zu transportieren, und einer Auswurfposition, in der das Einlaufförderband (10) in der Lage ist, das flache Objekt (101) in einer von der Transportstrecke (102) verschiedenen Richtung zu transportieren, montiert ist, und
mindestens der vordere Abschnitt des Auslaufförderbandes (20), schwenkbarer Abschnitt (21) genannt, beweglich zwischen einer Förderposition, in der das Auslaufförderband (20) in der Lage ist, das flache Objekt (101) entlang der Förderstrecke (102) zu transportieren, und der Auswurfposition, in der sich der schwenkbare Abschnitt (21) des Auslaufbandes (20) in einer von der Transportstrecke (102) verschiedenen Richtung erstreckt, und in einem Bereich des Raumes, der relativ zur Transportstrecke (102) demjenigen des schwenkbaren Abschnitts (11) des Einlaufförderbandes (10) gegenüberliegt, wenn dieser sich ebenfalls in der Auswurfposition befindet, montiert ist,
**dadurch gekennzeichnet,**
**dass** jedes Förderband (10, 20) mit einer verstellbaren, lokal verformbaren Struktur versehen ist, sodass nur ein Abschnitt (11, 21) des Förderbandes (10, 20) bewegbar ist, und
dadurch, dass jedes Förderband (10, 20) durch die Überlagerung von zwei Transporteinrichtungen, einer unteren Transporteinrichtung (15, 25) und einer oberen Transporteinrichtung (16, 26) gebildet wird, wobei der schwenkbare Abschnitt (11) des Einlaufförderbandes (10) sowohl den hinteren Abschnitt der unteren Transporteinrichtung (15), als auch den vorderen Abschnitt der oberen Transporteinrichtung (16) betrifft, der schwenkbare Abschnitt (21) des Auslaufförderbandes (20) sowohl den vorderen Abschnitt der unteren Transporteinrichtung (25) als auch den vorderen Abschnitt der oberen Transporteinrichtung (26) betrifft.

2. Vorrichtung nach Anspruch 1, **dadurch gekennzeichnet, dass** das vordere Ende (12) des Einlaufförderbandes (10) permanent im Bereich der Transportstrecke (102) positioniert ist.

3. Vorrichtung nach Anspruch 1 oder 2, **dadurch gekennzeichnet, dass** das hintere Ende (22) des Auslaufförderbandes (20) permanent im Bereich der Transportstrecke (102) positioniert ist.

4. Vorrichtung nach einem der vorstehenden Ansprüche, **dadurch gekennzeichnet, dass** sich in der Auswurfposition der schwenkbare Abschnitt (11) des Einlaufförderbandes (10) und der schwenkbare Abschnitt (21) des Auslaufförderbandes (20) relativ zur Transportstrecke (102) in schrägen Richtungen erstrecken, deren jeweilige Neigungen im Wesentlichen identisch sind.

5. Vorrichtung nach einem der vorstehenden Ansprüche, **dadurch gekennzeichnet, dass** die Transportstrecke (102) sich im Wesentlichen horizontal erstreckt, die Bewegung des schwenkbaren Abschnitts (11) des Einlaufförderbandes (10) nach unten geht, während die Bewegung des schwenkbaren Abschnitts (21) des Auslaufförderbandes (20) nach oben geht.

6. Vorrichtung nach einem der vorstehenden Ansprüche, **dadurch gekennzeichnet, dass** der schwenkbare Abschnitt (11) des Einlaufförderbandes (10) relativ zu einer an der Transportstrecke (102) befindlichen Querachse, die sich am vorderen Ende (13) des schwenkbaren Abschnitts (11) befindet, schwenkbar montiert ist und dadurch, dass der schwenkbare Abschnitt (21) des Auslaufförderbandes (20) relativ zu einer an der Transportstrecke (102) befindlichen Querachse, die sich am hinteren Ende (23) des schwenkbaren Abschnitts (21) befindet, schwenkbar montiert ist.

7. Vorrichtung nach einem der vorstehenden Ansprüche, **dadurch gekennzeichnet, dass** sie erste Betätigungsmittel (30) umfasst, die in der Lage sind, den schwenkbaren Abschnitt (11) des Einlaufförderbandes (10) zwischen der Förderposition und der Auswurfposition zu bewegen.

8. Vorrichtung nach einem der vorstehenden Ansprüche, **dadurch gekennzeichnet, dass** sie zweite Betätigungsmittel (40) umfasst, die in der Lage sind, den schwenkbaren Abschnitt (21) des Auslaufförderbandes (20) zwischen der Förderposition und der Auswurfposition zu bewegen.

9. Vorrichtung nach einem der vorstehenden Ansprüche, **dadurch gekennzeichnet, dass** sie Ausstoßmittel (50) umfasst, die in der Lage sind, jedes flache Objekt (101) am hinteren Ende (14) des Einlaufförderbandes (10) auszuwerfen, wenn der schwenkbare Abschnitt (11) sich in der Auswurfposition befindet.

10. Vorrichtung nach einem der vorstehenden Ansprüche, **dadurch gekennzeichnet, dass** sie Führungsmittel (60) umfasst, die in der Lage sind, die Bewegung jedes flachen Objektes (101) am Ausgang des Einlaufförderbandes (10) zu führen, wenn der schwenkbare Abschnitt (11) sich in der Auswurfposition befindet.

11. Vorrichtung nach Anspruch 10, **dadurch gekennzeichnet, dass** die Führungsmittel (60) einen statischen Deflektor (62) umfassen, der feststehend ist, sowie einen beweglichen Deflektor (61), der mit dem schwenkbaren Abschnitt (21) des Auslaufförderbandes (20) fest verbunden ist, und dadurch, dass sich der bewegliche Deflektor (61) im Wesentlichen koplanar zum statischen Deflektor (62) erstreckt, wenn sich das Auslaufförderband (20) in der Auswurfposition befindet.

12. Vorrichtung nach einem der vorstehenden Ansprüche, **dadurch gekennzeichnet, dass** sie Auffangmittel (70) umfasst, die in der Lage sind, jedes flache Objekt (101) aufzufangen, das am Ausgang des Einlaufförderbandes (10) abgeleitet wird.

13. Falz- und Klebemaschinenmodul (100), **dadurch gekennzeichnet, dass** es mindestens eine Auswurfvorrichtung (1) nach einem der vorstehenden Ansprüche umfasst.

14. Falz- und Klebemaschine (100), **dadurch gekennzeichnet, dass** sie mindestens eine Auswurfvorrichtung (1) nach einem der Ansprüche 1 bis 12 umfasst.

## Claims

1. Device for ejecting (1) a flat object (101) under conveyance along a conveying path (102), comprising an input conveyor (10) and an output conveyor (20) which are arranged successively following each other along the conveying path (102),
at least the downstream part of the input conveyor (10), referred to as orientable part (11), is mounted mobile between a conveying position wherein the input conveyor (10) is capable of transporting the flat object (101) along the conveying path (102), and an ejection position wherein the input conveyor (10) is capable of conveying the flat object (101) into a direction that is separate from the conveying path (102), and
at least the upstream part of the output conveyor (20), referred to as orientable part (21), is mounted mobile between a conveying position wherein the output conveyor (20) is capable of transporting the flat object (101) along the conveying path (102), and the ejection position wherein the orientable part (21) of the output conveyor (20) extends in a direction which is separate from the conveying path (102), and in a zone of the space which, with respect to the conveying path (102), is opposite that occupied by the orientable part (11) of the input conveyor (10) when the latter is itself also in an ejection position,
**characterised**
**in that** each conveyor (10, 20) is provided with a structure of variable geometry, able to be deformed locally such that only one part (11, 21) of the conveyor (10, 20) can be moved, and
**in that** each conveyor (10, 20) is constituted by the superposition of two transporters, a lower transporter (15, 25) and an upper transporter (16, 26), the orientable part (11) of the input conveyor (10) relates to both the downstream part of the lower transporter (15) and the downstream part of the upper transporter (16), the orientable part (21) of the output conveyor (20) relates to both the upstream part of the lower transporter (25) and the upstream part of the upper transporter (26).

2. Device according to claim 1, **characterised in that** the upstream end (12) of the input conveyor (10) is permanently positioned at the level of the conveying path (102).

3. Device according to claim 1 or 2, **characterised in that** the downstream end (22) of the output conveyor (20) is permanently positioned at the level of the conveying path (102).

4. Device according to one of the preceding claims, **characterised in that** in an ejection position, the orientable part (11) of the input conveyor (10) and the orientable part (21) of the output conveyor (20) extend with respect to conveyor path (102) in oblique directions, of which the respective inclinations are substantially identical.

5. Device according to one of the preceding claims, **characterised in that** the conveying path (102) extending substantially horizontally, the movement of the orientable part (11) of the input conveyor (10) is made towards the bottom, whereas the movement of the orientable part (21) of the output conveyor (20) occurs towards the top.

6. Device according to one of the preceding claims, **characterised in that** the orientable part (11) of the input conveyor (10) is mounted mobile, pivoting with respect to a transverse axis which is situated at the level of the conveying path (102) and which is positioned at the upstream end (13) of the orientable part (11), and **in that** the orientable part (21) of the output conveyor (20) is mounted mobile, pivoting with respect to a transverse axis which is situated at the level of the conveying path (102) and which is positioned at the downstream end (23) of the orientable part (21).

7. Device according to one of the preceding claims, **characterised in that** it comprises the first actuation means (30) capable of driving the movement of the orientable part (11) of the input conveyor (10) between the conveying position and the ejection position.

8. Device according to one of the preceding claims, **characterised in that** it comprises the second actuation means (40) capable of driving the movement of the orientable part (21) of the output conveyor (20) between the conveying position and the ejection position.

9. Device according to one of the preceding claims, **characterised in that** it comprises expulsion means (50) capable of expelling each flat object (101) to the downstream end (14) of the input conveyor (10) when the orientable part (11) is in an ejection position.

10. Device according to one of the preceding claims, **characterised in that** it comprises guide means (60) capable of guiding the movement of each flat object (101) to the output of the input conveyor (10) when the orientable part (11) is in an ejection position.

11. Device according to claim 10, **characterised in that** the guide means (60) comprise a static deflector (62) which is secured, as well as a mobile deflector (61) which is connected to the orientable part (21) of the output conveyor (20), and **in that** when the output conveyor (20) is in an ejection position, the mobile deflector (61) extends substantially coplanar with respect to the static deflector (62).

12. Device according to one of the preceding claims, **characterised in that** it comprises recovery means (70) capable of receiving each flat object (101) which is released at the output of the input conveyor (10).

13. Folding and gluing machine module (100), **characterised in that** it comprises at least one ejection device (1) according to one of the preceding claims.

14. Folding and gluing machine (100), **characterised in that** it comprises at least one ejection device (1) according to one of claims 1 to 12.
